# EUROPEAN PATENT SPECIFICATION

(11) **EP 2 529 294 B1**
(45) Date of publication and mention of the grant of the patent: **01.04.2020**
(21) Application number: 11736731.8
(22) Date of filing: 13.01.2011
(51) Int. Cl.: G06F 3/12, B41J 29/38, G06F 1/26, H04N 1/00

(54) **INFORMATION PROCESSING APPARATUS AND CONTROL METHOD OF INFORMATION PROCESSING APPARATUS**
INFORMATIONSVERARBEITUNGSVORRICHTUNG UND STEUERUNGSVERFAHREN EINER INFORMATIONSVERARBEITUNGSVORRICHTUNG
APPAREIL DE TRAITEMENT D'INFORMATIONS ET PROCÉDÉ DE COMMANDE D'APPAREIL DE TRAITEMENT D'INFORMATIONS

(30) Priority: 29.01.2010 JP 2010019437
(43) Date of publication of application: 05.12.2012
(73) Proprietor: Canon Kabushiki Kaisha, Tokyo 146-8501 (JP)
(72) Inventor: ONISHI, Tetsuya, Tokyo 146-8501 (JP)
(74) Representative: TBK
(86) International application number: PCT/JP2011/000122
(87) International publication number: WO 2011/093014

(56) References cited:
- EP-A1- 1 705 773
- JP-A- 9 214 623
- JP-A- 2002 244 773
- US-A1- 2006 119 742
- US-A1- 2008 075 494
- US-A1- 2009 256 530
- US-A1- 2009 309 423

## Description

### Technical Field

The present invention relates to an information processing apparatus, a control method for controlling the information processing apparatus, and a computer program product for causing a computer to perform the control method.

### Background Art

There is an information processing apparatus that operates in a normal mode and in a power saving mode in which less power is consumed as compared to the normal mode. Japanese Patent Application Laid-Open No. 9-36996 (JP 9 36996 A) discusses, when an information processing apparatus is not used for a predetermined time, the information processing apparatus is shifted from the normal mode to the power saving mode.

On the other hand, there is an information processing apparatus that includes a volatile storage medium. When power supply is stopped, the information processing apparatus backs up the volatile storage medium by supplying power from a battery.

The technique discussed in Japanese Patent Application Laid-Open No. 9-36996 (JP 9 36996 A) may be applied to the above-described information processing apparatus. In such a case, if the information processing apparatus charges the battery only in the normal mode, the information processing apparatus may shift to the power saving mode even when the battery is not fully charged.

Further background art is known from the following documents:
The document US 2009/0309423 A1 discloses a charge control apparatus operable in a first power mode or a second power mode having power consumption less than that of the first power mode. The charge control apparatus includes a main power supply, an auxiliary power supply, a charging unit, a time count unit, and a charge control unit, wherein the charge control unit controls the charging unit to switch from a first charge mode to a second charge mode upon detecting that the charging time counted by the time count unit is or larger than a predetermined time period in the first power mode, and wherein the charge control unit controls the charging unit to operate in the second charge mode when the charge control apparatus operates in the second power mode.

Also, the documents EP 1 705 773 A1, US 2008/0075494 A1, US 2009/0256530 and US 2006/0119742 A1 relate to similar techniques for battery charging and/or power management in information/image processing apparatuses.

### Summary of Invention

The present invention is directed to preventing an information processing apparatus from shifting to a power saving mode when a battery for backing up a volatile storage unit is not fully charged.

According to aspects of the present invention, there are provided an information processing apparatus, a control method for controlling the information processing apparatus, and a computer program product for causing a computer to perform the control method, as defined in the claims.

Further features and aspects of the present invention will become apparent from the following detailed description of exemplary embodiments with reference to the attached drawings.

### Brief Description of Drawings

The accompanying drawings, which are incorporated in and constitute a part of the specification, illustrate exemplary embodiments, features, and aspects of the invention and, together with the description, serve to explain the principles of the invention.
Fig. 1 is a block diagram illustrating a configuration of a multifunction peripheral (MFP).
Fig. 2 is a block diagram illustrating details of a power supply unit.
Fig. 3 is a flowchart illustrating an operation of the MFP.
Fig. 4 is a flowchart illustrating details of charging a battery.

### Description of Embodiments

Various exemplary embodiments, features, and aspects of the invention will be described in detail below with reference to the drawings.

According to the present invention, an MFP will be described as an example of an information processing apparatus. However, the information processing apparatus may be an apparatus other than the MFP.

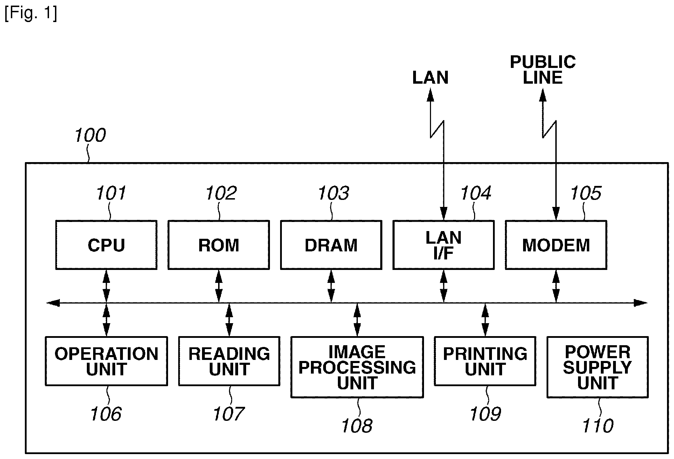

Fig. 1 is a block diagram illustrating a configuration of an MFP 100. Referring to Fig. 1, a central processing unit (CPU) 101 controls the operations of the MFP 100. A read-only memory (ROM) 102 is a non-volatile storage medium that stores programs used by the CPU 101.

A dynamic random access memory (DRAM) 103 is a volatile storage medium that stores programs stored in the ROM 102 and image data input from a local area network (LAN) interface (I/F) 104, a modem 105, or a reading unit 107.

The LAN I/F 104 is used for inputting and outputting the image data to and from the MFP 100 and an external device via the LAN.

The modem 105 is used for inputting and outputting the image data to and from the MFP 100 and the external device via a public line. An operation unit 106 receives an instruction to operate the MFP 100 from a user. The reading unit 107 reads a document and inputs the image data. An image processing unit 108 performs various image processing on the image data input from the LAN I/F 104, the modem 105, and the reading unit 107.

A printing unit 109 prints an image on a sheet based on the image data on which the image processing unit 108 has performed image processing.

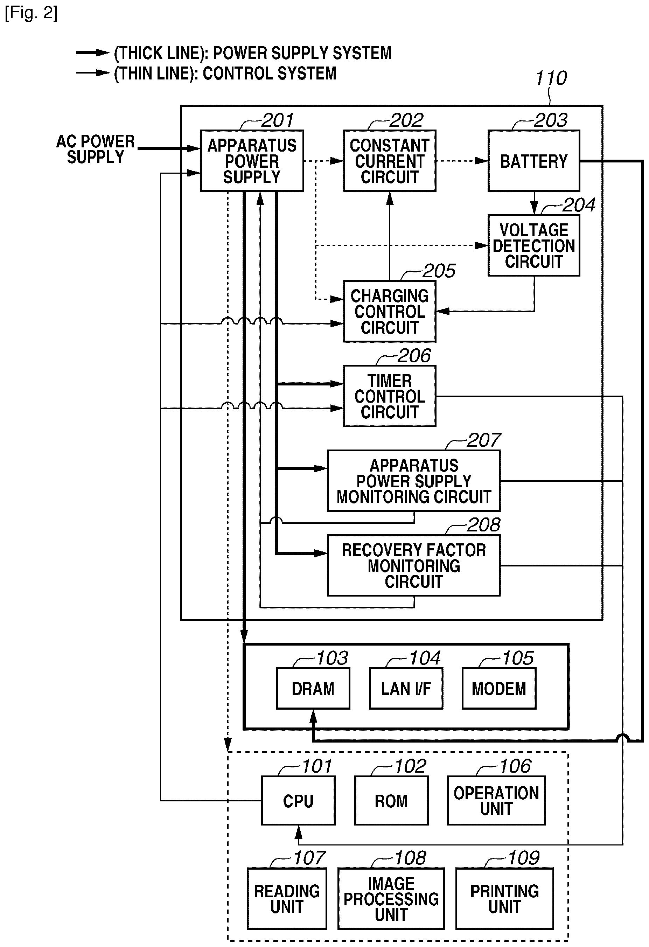

A power supply unit 110 is connected to an alternative current (AC) power supply and supplies power to each of the components in the MFP 100. The details of the power supply unit 110 will be described in detail below with reference to Fig. 2.

Fig. 2 is a block diagram illustrating in detail the power supply unit 110. Referring to Fig. 2, arrows drawn with a thick line indicate a flow of a power supply system, and arrows drawn with a thin line indicate a flow of a control system.

An apparatus power supply 201 (i.e., an example of a first supply unit) is connected to the AC power supply and supplies power to each component in the MFP 100.

A constant current circuit 202 sets a current received from the apparatus power supply 201 to a predetermined value and charges a battery 203.

The battery 203 (i.e., an example of a second supplying unit) supplies power to the DRAM 103 when the apparatus power supply 201 does not directly supply power to the DRAM 103 due to cutoff of the AC power supply.

A voltage detection unit 204 detects a voltage of the battery 203, transmits a signal to a charging control circuit 205, and prevents the battery 203 from becoming overcharged. The charging control circuit 205 operates on the constant current circuit 202 and controls charging of the battery 203.

A timer control circuit 206 (i.e., an example of a first measurement unit and a second measurement unit) measures various charging time periods (e.g., continuous charging time and total charging time) to be described below. An apparatus power supply monitoring circuit 207 detects a power supplying status of the apparatus power supply 201 and monitors whether the AC power supply is cut off. A recovery factor monitoring circuit 208 detects a factor for causing the MFP to recover from a power saving mode (i.e., shift to a normal mode).

Fig. 2 illustrates a status of power supply from the power supplying unit 110 to each component in the MFP 100. The MFP 100 operates in either of the two modes described below according to the status of power supply to each component.

A first mode is the normal mode. The normal mode is a mode in which the MFP is operating in a normal power state. In the normal mode, the apparatus power supply 201 supplies power to the components indicated by both the arrows drawn with the thick solid line and the broken line in Fig. 2.

A second mode is the power saving mode. The power saving mode is a mode in which the MFP operates in a power saving state in which power consumption is lower as compared to the normal mode. In the power saving mode, the apparatus power supply 201 supplies power only to the components indicated by the arrows drawn with the thick solid line in Fig. 2.

According to the present exemplary embodiment, there is only one power saving mode. However, there may be a plurality of power saving modes in which power is supplied to different components.

Further, if the AC power supply is cut off, the apparatus power supply 201 becomes unable to supply power to the components indicated by both the arrows drawn with the thick solid line and the broken line in Fig. 2. The battery 203 thus supplies power to the DRAM 103.

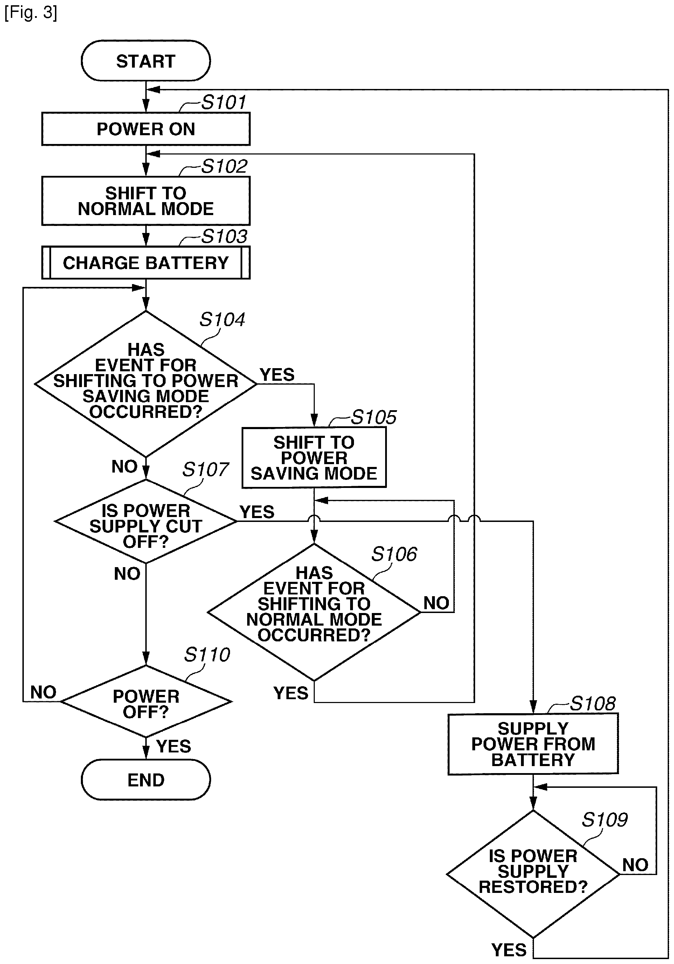

Fig. 3 is a flowchart illustrating the operation of the MFP 100. The operation illustrated in the flowchart is realized by the CPU 101 reading out the program stored in the ROM 102 to the DRAM 103 and executing it.

In step S101, the CPU 101 receives an instruction to turn on the MFP 100 from the user via the operation unit 106.

In step S102, the CPU 101 controls the apparatus power supply 201 to shift the MFP 100 to the normal mode.

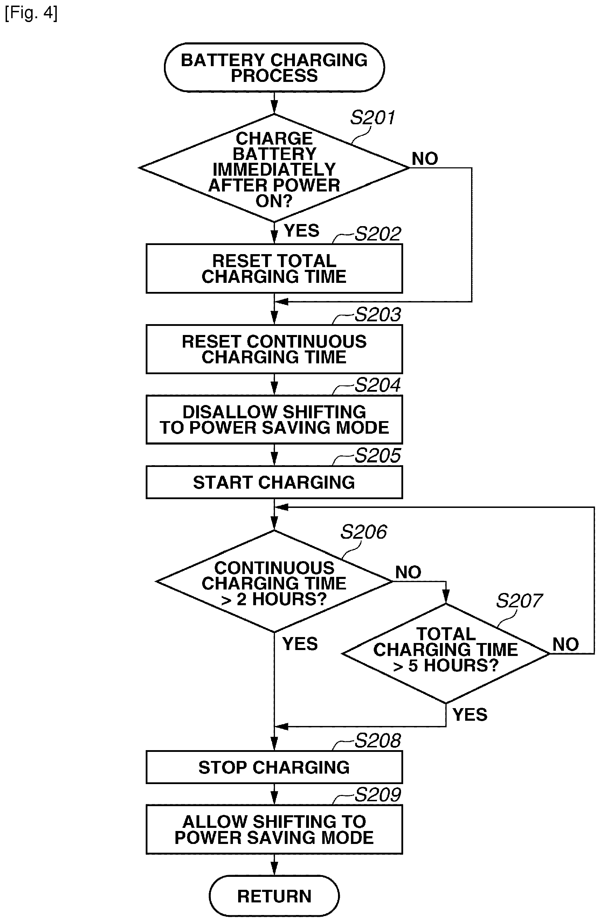

In step S103, the CPU 101 controls the charging control circuit 205 to charge the battery 203. The process for charging the battery performed in step S103 will be described in detail below with reference to the flowchart illustrated in Fig. 4.

In step S104, the CPU 101 determines whether an event that is a predetermined factor (condition) for shifting the MFP 100 to the power saving mode has occurred. The predetermined factor is, for example, whether a predetermined time period has elapsed while the operation unit 106, the reading unit 107, the image processing unit 108, and the printing unit 109 have not operated. If the CPU 101 determines that the predetermined factor for shifting the MFP 100 to the power saving mode has occurred (YES in step S104), the process proceeds to step S105. On the other hand, if the CPU 101 determines that the predetermined factor for shifting the MFP 100 to the power saving mode has not occurred (NO in step S104), the process proceeds to step S107.

In step S105, the CPU 101 controls the apparatus power supply 201 to shift the MFP 100 to the power saving mode.

In step S106, the recovery factor monitoring circuit 208 determines whether an event that is a predetermined factor (condition) for shifting the MFP 100 to the normal mode has occurred. The predetermined factor is, for example, whether the LAN I/F 104 or the modem 105 has operated and received data. If the recovery factor monitoring circuit 208 determines that the predetermined factor for shifting the MFP 100 to the normal mode has occurred (YES in step S106), the process returns to step S102. If the recovery factor monitoring circuit 208 determines that the predetermined factor for shifting the MFP 100 to the normal mode has not occurred (NO in step S 106), the recovery factor monitoring circuit 208 repeats the process in step S106 and waits until it is determined that the event has occurred.

In step S107, the CPU 101 receives a signal from the apparatus power supply monitoring circuit 207 and determines whether the AC power supply has been cut off. The CPU 101 and the apparatus power supply monitoring circuit 207 are connected by a capacitor (not illustrated) and thus may be operable for a certain amount of time even after the AC power supply is cut off. If the CPU 101 determines that the AC power supply has been cut off (YES in step S 107), the process proceeds to step S108. If the CPU 101 determines that the AC power supply has not been cut off (NO in step S107), the process proceeds to step S110.

In step S108, the CPU 101 performs control so that the battery 203 supplies power to the DRAM 103.

In step S109, the apparatus power supply monitoring circuit 207 determines whether the AC power supply is restored. If the apparatus power supply monitoring circuit 207 determines that the AC power supply is restored (YES in step S109), the process returns to step S101. On the other hand, if the apparatus power supply monitoring circuit 207 determines that the AC power supply is not restored (NO in step S 109), the apparatus power supply monitoring circuit 207 repeats the process in step S109 and waits until it is determined that the AC power supply is restored.

In step S110, the CPU 101 determines whether an instruction to turn off the MFP 100 has been received from the user via the operation unit 106. If the CPU 101 determines that the instruction to turn off the MFP 100 has been received from the user (YES in step S110), the CPU 101 ends the control. If the CPU 101 determines that the instruction to turn off the MFP 100 has not been received from the user (NO in step S I 10), the process returns to step S104.

Fig. 4 is a flowchart illustrating details of the battery charging process performed in step S103 illustrated in Fig. 3. In step S201, the CPU 101 inquires the recovery factor monitoring circuit 208 and determines whether charging of the battery in step S 103 is to be performed immediately after the MFP 100 has been turned on. The CPU 101 makes the determination based on whether the recovery factor monitoring circuit 208 sends notification of that charging of the battery is performed immediately after the MFP 100 has been turned on. If the CPU 101 determines that charging of the battery is performed immediately after the MFP 100 has been turned on (YES in step S201), the process proceeds to step S202. On the other hand, if the CPU 101 determines that charging of the battery is performed not immediately after the MFP 100 has been turned on (NO in step S201), the process proceeds to step S203.

In step S202, the CPU 101 controls the timer control circuit 206 to reset a total charging time of the battery 203 to zero and newly start measuring the time. The total charging time is a total amount of time the MFP 100 has operated in the normal mode after the MFP 100 has been turned on, within an amount of time the battery is charged.

In step S203, the CPU 101 controls the timer control circuit 206 to reset a continuous charging time of the battery 203 to zero and newly start measuring the time. The continuous charging time is a total amount of time the MFP 100 has continuously operated in the normal mode after the MFP 100 has shifted to the normal mode, within the amount of time the battery 203 is charged.

In step S204, the CPU 101 controls the apparatus power supply 201 to disallow the MFP 100 to shift to the power saving mode. By performing the processes in step S204 and step S209, the MFP 100 is thus controlled not to shift to the power saving mode while performing the processes in step S205 to step S208.

In step S205, the CPU 101 controls the charging control circuit 205 to start charging the battery 203.

In step S206, the CPU 101 inquires the timer control circuit 206 to determine whether the continuous charging time has become longer than two hours (i.e., an example of a first predetermined time). If the CPU 101 determines that the continuous charging time has become longer than two hours (YES in step S206), the process proceeds to step S208. If the CPU 101 determines that the continuous charging time has not become longer than two hours (NO in step S206), the process proceeds to step S207.

In step S207, the CPU 101 inquires the timer control circuit 206 to determine whether the total charging time has become longer than five hours (i.e., an example of a second predetermined time which is longer than the first predetermined time). If the CPU 101 determines that the total charging time has become longer than five hours (YES in step S207), the process proceeds to step S208. If the CPU 101 determines that the total charging time has not become longer than five hours (NO in step S207), the process returns to step S206.

In step S208, the CPU 101 controls the charging control circuit 205 to stop charging the battery 203. The process in step S208 may be performed after the voltage detection circuit 204 detects that the battery 203 has become charged. Further, it is not necessary to completely stop charging the battery 203 in step S208, and a small amount of charging that can maintain the battery 203 may be continued by performing trickle charge.

In step S209, the CPU 101 controls the apparatus power supply 201 to allow the MFP 100 to shift to the power saving mode. By performing the processes in step S204 and step S209, the MFP 100 is thus controlled not to shift to the power saving mode while performing the processes in step S205 to step S208.

Aspects of the present invention can also be realized by a computer of a system or apparatus (or devices such as a CPU or MPU) that reads out and executes a program recorded on a memory device to perform the functions of the above-described embodiment(s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (e.g., computer-readable medium).

While the present invention has been described with reference to exemplary embodiments, it is to be understood that the invention is limited by the appended claims.

## Claims

1. A multifunction peripheral (100) which is configured to operate in a first mode or a second mode, in which the multifunction peripheral consumes less power than in the first mode, the apparatus comprising:
an inputting means, which is at least one of a network interface (104) configured to input image data from a local area network, a modem (105) configured to input image data from a public line and a reading unit (107) configured to read a document and input image data;
a volatile storage medium (103) configured to store the image data input by the inputting means;
a first supplying unit (201) configured to supply power to the storage medium if the multifunction peripheral is operating in the first mode;
a second supplying unit (203) configured to supply power to the storage medium if the multifunction peripheral is operating in the second mode;
a charging unit (202) configured to charge the second supplying unit if the multifunction peripheral is operating in the first mode;
a measurement unit (206) configured to measure an amount of time in which the multifunction peripheral operates in the first mode after the multifunction peripheral shifts to the first mode; and
a control unit (101) configured to control the multifunction peripheral,
**characterized in that**
the control unit (101) is configured to control the charging unit (202) to charge the second supplying unit in the first mode and control the first supplying unit (201) to disallow the multifunction peripheral to shift to the second mode, where the charging unit (202) does not charge the second supplying unit, until an amount of time, which is measured by the measurement unit and in which the multifunction peripheral continuously operates in the first mode, becomes greater than a first predetermined amount of time,
the control unit (101) is configured to control the first supplying unit (201) to allow the multifunction peripheral to shift to the second mode, where the charging unit (202) does not charge the second supplying unit, after the amount of time, which is measured by the measurement unit and in which the multifunction peripheral continuously operates in the first mode becomes greater than the first predetermined amount of time, and
the control unit (101) is configured to control the first supplying unit (201) to allow the multifunction peripheral to shift to the second mode, where the charging unit (202) does not charge the second supplying unit, after a total amount of time, which is measured by the measurement unit and in which the multifunction peripheral operates in the first mode after the multifunction peripheral is turned on, becomes greater than a second predetermined amount of time which is longer than the first predetermined amount of time.

2. The multifunction peripheral according to claim 1, further comprising a printing unit (109) configured to print an image based on the image data stored in the volatile storage medium (103).

3. The multifunction peripheral according to claim 1 or 2, wherein the control unit (101) is configured to control the charging unit (202) to stop charging the second supplying unit (203), after the total amount of time, which is measured by the measurement unit and in which the multifunction peripheral operates in the first mode after the multifunction peripheral is turned on, becomes greater than the second predetermined amount of time.

4. The multifunction peripheral according to claim 1 or 2, wherein the second supplying unit (203) is charged by trickle charge, after the total amount of time, which is measured by the measurement unit and in which the multifunction peripheral operates in the first mode after the multifunction peripheral is turned on, becomes greater than the second predetermined amount of time.

5. A method for controlling a multifunction peripheral (100) which is configured to operate in a first mode or a second mode, in which the multifunction peripheral consumes less power than in the first mode, and includes an inputting means, which is at least one of a network interface (104) configured to input image data from a local area network, a modem (105) configured to input image data from a public line and a reading unit (107) configured to read a document and input image data, a volatile storage medium (103) configured to store the image data input by the inputting mean, a first supplying unit (201) configured to supply power to the storage medium if the multifunction peripheral is operating in the first mode, and a second supplying unit (203) configured to supply power to the storage medium if the multifunction peripheral is operating in the second mode, the method comprising:
charging (S103) the second supplying unit if the multifunction peripheral is operating in the first mode;
measuring an amount of time in which the multifunction peripheral operates in the first mode after the multifunction peripheral shifts to the first mode; and
controlling the multifunction peripheral,
**characterized in that** said controlling comprises:
controlling (S204, S205) the charging unit to charge the second supplying unit in the first mode and the first supplying unit to disallow the multifunction peripheral to shift to the second mode, where the charging unit does not charge the second supplying unit, until an amount of time, which is measured and in which the multifunction peripheral continuously operates in the first mode, becomes greater than a first predetermined amount of time,
controlling (S209, S206 (YES)) the first supplying unit to allow the multifunction peripheral to shift to the second mode, where the charging unit does not charge the second supplying unit, after the amount of time, which is measured and in which the multifunction peripheral continuously operates in the first mode, becomes greater than the first predetermined amount of time, and
controlling (S209, S207 (YES)) the first supplying unit to allow the multifunction peripheral to shift to the second mode, where the charging unit does not charge the second supplying unit, after a total amount of time, which is measured and in which the multifunction peripheral operates in the first mode after the multifunction peripheral is turned on, becomes greater than a second predetermined amount of time which is longer than the first predetermined amount of time.

6. The method according to claim 5, wherein the multifunction peripheral further comprises a printing unit (109) configured to print an image based on the image data stored in the volatile storage medium (103).

7. The method according to claim 5 or 6, further comprising controlling (S208, S207 (YES)) the charging unit to stop charging the second supplying unit, after the total amount of time, which is measured and in which the multifunction peripheral operates in the first mode after the multifunction peripheral is turned on, becomes greater than the second predetermined amount of time.

8. The method according to claim 5 or 6, further comprising charging the second supplying unit by trickle charge, after the total amount of time which is measured and in which the multifunction peripheral operates in the first mode after the multifunction peripheral is turned on becomes greater than the second predetermined amount of time.

9. Computer program product comprising instructions which, when the program is executed by a computer, cause the computer to carry out the steps of the method of any one of claims 5 to 8.

## Patentansprüche

1. Multifunktionsperipheriegerät (100), das konfiguriert ist zum Arbeiten in einem ersten Modus oder einem zweiten Modus, in dem das Multifunktionsperipheriegerät weniger Energie verbraucht als in dem ersten Modus, wobei die Vorrichtung aufweist:
eine Eingabeeinrichtung, die zumindest eines ist von einer Netzwerkschnittstelle (104), die zum Eingeben von Bilddaten von einem lokalen Netzwerk konfiguriert ist, einem Modem (105), das zum Eingeben von Bilddaten von einer öffentlichen Leitung konfiguriert ist, und einer Leseeinheit (107), die zum Lesen eines Dokuments und Eingeben von Bilddaten konfiguriert ist;
ein flüchtiges Speichermedium (103), das konfiguriert ist zum Speichern der durch die Eingabeeinrichtung eingegebenen Bilddaten;
eine erste Versorgungseinheit (201), die konfiguriert ist zum Zuführen von Energie an das Speichermedium, wenn das Multifunktionsperipheriegerät in dem ersten Modus arbeitet;
eine zweite Versorgungseinheit (203), die konfiguriert ist zum Zuführen von Energie an das Speichermedium, wenn das Multifunktionsperipheriegerät in dem zweiten Modus arbeitet;
eine Ladeeinheit (202), die konfiguriert ist zum Laden der zweiten Versorgungseinheit, wenn das Multifunktionsperipheriegerät in dem ersten Modus arbeitet;
eine Messeinheit (206), die konfiguriert ist zum Messen einer Zeitdauer, in der das Multifunktionsperipheriegerät in dem ersten Modus arbeitet, nachdem das Multifunktionsperipheriegerät in den ersten Modus umschaltet; und
eine Steuereinheit (101), die konfiguriert ist zum Steuern des Multifunktionsperipheriegeräts,
**dadurch gekennzeichnet, dass**
die Steuereinheit (101) konfiguriert ist zum Steuern der Ladeeinheit (202) zum Laden der zweiten Versorgungseinheit in dem ersten Modus und Steuern der ersten Versorgungseinheit (201) zum Nichtzulassen, dass das Multifunktionsperipheriegerät in den zweiten Modus umschaltet, in dem die Ladeeinheit (202) die zweite Versorgungseinheit nicht lädt, bis eine Zeitdauer, die durch die Messeinheit gemessen wird, und in der das Multifunktionsperipheriegerät fortlaufend in dem ersten Modus arbeitet, größer wird als eine erste vorbestimmte Zeitdauer,
die Steuereinheit (101) konfiguriert ist zum Steuern der ersten Versorgungseinheit (201) zum Zulassen, dass das Multifunktionsperipheriegerät in den zweiten Modus umschaltet, in dem die Ladeeinheit (202) die zweite Versorgungseinheit nicht lädt, nachdem die Zeitdauer, die durch die Messeinheit gemessen wird, und in der das Multifunktionsperipheriegerät fortlaufend in dem ersten Modus arbeitet, größer wird als die erste vorbestimmte Zeitdauer, und
die Steuereinheit (101) konfiguriert ist zum Steuern der ersten Versorgungseinheit (201) zum Zulassen, dass das Multifunktionsperipheriegerät in den zweiten Modus umschaltet, in dem die Ladeeinheit (202) die zweite Versorgungseinheit nicht lädt, nachdem eine Gesamtzeitdauer, die durch die Messeinheit gemessen wird, und in der das Multifunktionsperipheriegerät in dem ersten Modus arbeitet, nachdem das Multifunktionsperipheriegerät eingeschaltet wird, größer wird als eine zweite vorbestimmte Zeitdauer, die länger ist als die erste vorbestimmte Zeitdauer.

2. Multifunktionsperipheriegerät gemäß Anspruch 1, zusätzlich mit einer Druckeinheit (109), die konfiguriert ist zum Drucken eines Bilds basierend auf den in dem flüchtigen Speichermedium (103) gespeicherten Bilddaten.

3. Multifunktionsperipheriegerät gemäß Anspruch 1 oder 2, wobei die Steuereinheit (101) konfiguriert ist zum Steuern der Ladeeinheit (202) zum Stoppen eines Ladens der zweiten Versorgungseinheit (203), nachdem die Gesamtzeitdauer, die durch die Messeinheit gemessen wird, und in der das Multifunktionsperipheriegerät in dem ersten Modus arbeitet, nachdem das Multifunktionsperipheriegerät eingeschaltet wird, größer wird als die zweite vorbestimmte Zeitdauer.

4. Multifunktionsperipheriegerät gemäß Anspruch 1 oder 2, wobei die zweite Versorgungseinheit (203) durch Erhaltungsladung geladen wird, nachdem die Gesamtzeitdauer, die durch die Messeinheit gemessen wird, und in der das Multifunktionsperipheriegerät in dem ersten Modus arbeitet, nachdem das Multifunktionsperipheriegerät eingeschaltet wird, größer wird als die zweite vorbestimmte Zeitdauer.

5. Verfahren zur Steuerung eines Multifunktionsperipheriegeräts (100), das konfiguriert ist zum Arbeiten in einem ersten Modus oder einem zweiten Modus, in dem das Multifunktionsperipheriegerät weniger Energie verbraucht als in dem ersten Modus, und das umfasst: eine Eingabeeinrichtung, die zumindest eines ist von einer Netzwerkschnittstelle (104), die zum Eingeben von Bilddaten von einem lokalen Netzwerk konfiguriert ist, einem Modem (105), das zum Eingeben von Bilddaten von einer öffentlichen Leitung konfiguriert ist, und einer Leseeinheit (107), die zum Lesen eines Dokuments und Eingeben von Bilddaten konfiguriert ist, ein flüchtiges Speichermedium (103), das konfiguriert ist zum Speichern der durch die Eingabeeinrichtung eingegebenen Bilddaten, eine erste Versorgungseinheit (201), die konfiguriert ist zum Zuführen von Energie an das Speichermedium, wenn das Multifunktionsperipheriegerät in dem ersten Modus arbeitet, und eine zweite Versorgungseinheit (203), die konfiguriert ist zum Zuführen von Energie an das Speichermedium, wenn das Multifunktionsperipheriegerät in dem zweiten Modus arbeitet, wobei das Verfahren aufweist:
Laden (S103) der zweiten Versorgungseinheit, wenn das Multifunktionsperipheriegerät in dem ersten Modus arbeitet;
Messen einer Zeitdauer, in der das Multifunktionsperipheriegerät in dem ersten Modus arbeitet, nachdem das Multifunktionsperipheriegerät in den ersten Modus umschaltet; und
Steuern des Multifunktionsperipheriegeräts,
**dadurch gekennzeichnet, dass** das Steuern aufweist:
Steuern (S204, S205) der Ladeeinheit zum Laden der zweiten Versorgungseinheit in dem ersten Modus und der ersten Versorgungseinheit zum Nichtzulassen, dass das Multifunktionsperipheriegerät in den zweiten Modus umschaltet, in dem die Ladeeinheit die zweite Versorgungseinheit nicht lädt, bis eine Zeitdauer, die gemessen wird, und in der das Multifunktionsperipheriegerät fortlaufend in dem ersten Modus arbeitet, größer wird als eine erste vorbestimmte Zeitdauer,
Steuern (S209, S206 (JA)) der ersten Versorgungseinheit zum Zulassen, dass das Multifunktionsperipheriegerät in den zweiten Modus umschaltet, in dem die Ladeeinheit die zweite Versorgungseinheit nicht lädt, nachdem die Zeitdauer, die gemessen wird, und in der das Multifunktionsperipheriegerät fortlaufend in dem ersten Modus arbeitet, größer wird als die erste vorbestimmte Zeitdauer, und
Steuern (S209, S207 (JA)) der ersten Versorgungseinheit zum Zulassen, dass das Multifunktionsperipheriegerät in den zweiten Modus umschaltet, in dem die Ladeeinheit die zweite Versorgungseinheit nicht lädt, nachdem eine Gesamtzeitdauer, die gemessen wird, und in der das Multifunktionsperipheriegerät in dem ersten Modus arbeitet, nachdem das Multifunktionsperipheriegerät eingeschaltet wird, größer wird als eine zweite vorbestimmte Zeitdauer, die länger ist als die erste vorbestimmte Zeitdauer.

6. Verfahren gemäß Anspruch 5, wobei das Multifunktionsperipheriegerät zusätzlich eine Druckeinheit (109) aufweist, die konfiguriert ist zum Drucken eines Bilds basierend auf den in dem flüchtigen Speichermedium (103) gespeicherten Bilddaten.

7. Verfahren gemäß Anspruch 5 oder 6, zusätzlich mit einem Steuern (S208, S207 (JA)) der Ladeeinheit zum Stoppen eines Ladens der zweiten Versorgungseinheit, nachdem die Gesamtzeitdauer, die gemessen wird, und in der das Multifunktionsperipheriegerät in dem ersten Modus arbeitet, nachdem das Multifunktionsperipheriegerät eingeschaltet wird, größer wird als die zweite vorbestimmte Zeitdauer.

8. Verfahren gemäß Anspruch 5 oder 6, zusätzlich mit einem Laden der zweiten Versorgungseinheit durch Erhaltungsladung, nachdem die Gesamtzeitdauer, die gemessen wird, und in der das Multifunktionsperipheriegerät in dem ersten Modus arbeitet, nachdem das Multifunktionsperipheriegerät eingeschaltet wird, größer wird als die zweite vorbestimmte Zeitdauer.

9. Computerprogrammprodukt mit Anweisungen, die, wenn das Programm durch einen Computer ausgeführt wird, den Computer zum Durchführen der Schritte des Verfahrens gemäß einem der Ansprüche 5 bis 8 veranlassen.

## Revendications

1. Périphérique multifonction (100) qui est configuré pour fonctionner dans un premier mode ou dans un second mode, dans lequel le périphérique multifonction consomme moins de courant que dans le premier mode, l'appareil comprenant :
un moyen d'entrée, qui est au moins l'un d'une interface réseau (104) configurée pour entrer des données d'image à partir d'un réseau local, d'un modem (105) configuré pour entrer des données d'image à partir d'une ligne publique, et d'une unité de lecture (107) configurée pour lire un document et pour entrer des données d'image ;
un support d'informations volatile (103) configuré pour mémoriser les données d'image entrées par le moyen d'entrée ;
une première unité d'alimentation (201) configurée pour alimenter en courant le support d'informations si le périphérique multifonction fonctionne dans le premier mode ;
une seconde unité d'alimentation (203) configurée pour alimenter en courant le support d'informations si le périphérique multifonction fonctionne dans le second mode ;
une unité de charge (202) configurée pour charger la seconde unité d'alimentation si le périphérique multifonction fonctionne dans le premier mode ;
une unité de mesure (206) configurée pour mesurer une quantité de temps de fonctionnement du périphérique multifonction dans le premier mode après la commutation du périphérique multifonction vers le premier mode ; et
une unité de commande (101) configurée pour commander le périphérique multifonction,
**caractérisé en ce que**
l'unité de commande (101) est configurée pour commander l'unité de charge (202) pour qu'elle charge la seconde unité d'alimentation dans le premier mode et pour commander la première unité d'alimentation (201) pour qu'elle interdise au périphérique multifonction de commuter vers le second mode, où l'unité de charge (202) ne charge pas la seconde unité d'alimentation, jusqu'à ce qu'une quantité de temps, qui est mesurée par l'unité de mesure et durant laquelle le périphérique multifonction fonctionne en continu dans le premier mode, devienne supérieure à une première quantité de temps prédéterminée,
l'unité de commande (101) est configurée pour commander la première unité d'alimentation (201) pour qu'elle permette au périphérique multifonction de commuter vers le second mode, où l'unité de charge (202) ne charge pas la seconde unité d'alimentation, une fois que la quantité de temps, qui est mesurée par l'unité de mesure et durant laquelle le périphérique multifonction fonctionne en continu dans le premier mode, devient supérieure à la première quantité de temps prédéterminée, et
l'unité de commande (101) est configurée pour commander la première unité d'alimentation (201) pour qu'elle permette au périphérique multifonction de commuter vers le second mode, où l'unité de charge (202) ne charge pas la seconde unité d'alimentation, une fois qu'une quantité de temps totale, qui est mesurée par l'unité de mesure et durant laquelle le périphérique multifonction fonctionne dans le premier mode après la mise sous tension du périphérique multifonction, devient supérieure à une seconde quantité de temps prédéterminée qui est plus longue que la première quantité de temps prédéterminée.

2. Périphérique multifonction selon la revendication 1, comprenant en outre une unité d'impression (109) configurée pour imprimer une image sur la base des données d'image mémorisées dans le support d'informations volatile (103) .

3. Périphérique multifonction selon la revendication 1 ou 2, dans lequel l'unité de commande (101) est configurée pour commander l'unité de charge (202) pour qu'elle interrompe la charge de la seconde unité d'alimentation (203), une fois que la quantité de temps totale, qui est mesurée par l'unité de mesure et durant laquelle le périphérique multifonction fonctionne dans le premier mode après la mise sous tension du périphérique multifonction, devient supérieure à la seconde quantité de temps prédéterminée.

4. Périphérique multifonction selon la revendication 1 ou 2, dans lequel la seconde unité d'alimentation (203) est chargée par une charge de maintien, une fois que la quantité de temps totale, qui est mesurée par l'unité de mesure et durant laquelle le périphérique multifonction fonctionne dans le premier mode après la mise sous tension du périphérique multifonction, devient supérieure à la seconde quantité de temps prédéterminée.

5. Procédé de commande d'un périphérique multifonction (100) qui est configuré pour fonctionner dans un premier mode ou dans un second mode, dans lequel le périphérique multifonction consomme moins de courant que dans le premier mode, et qui comprend un moyen d'entrée, qui est au moins l'un d'une interface réseau (104) configurée pour entrer des données d'image à partir d'un réseau local, d'un modem (105) configuré pour entrer des données d'image à partir d'une ligne publique, et d'une unité de lecture (107) configurée pour lire un document et pour entrer des données d'image, un support d'informations volatile (103) configuré pour mémoriser les données d'image entrées par le moyen d'entrée, une première unité d'alimentation (201) configurée pour alimenter en courant le support d'informations si le périphérique multifonction fonctionne dans le premier mode, et une seconde unité d'alimentation (203) configurée pour alimenter en courant le support d'informations si le périphérique multifonction fonctionne dans le second mode, le procédé comprenant les étapes consistant à :
charger (S103) la seconde unité d'alimentation si le périphérique multifonction fonctionne dans le premier mode ;
mesurer une quantité de temps durant laquelle le périphérique multifonction fonctionne dans le premier mode après la commutation du périphérique multifonction vers le premier mode ; et
commander le périphérique multifonction,
**caractérisé en ce que** ladite étape de commande consiste à :
commander (S204, S205) l'unité de charge pour qu'elle charge la seconde unité d'alimentation dans le premier mode et la première unité d'alimentation pour qu'elle interdise au périphérique multifonction de commuter vers le second mode, où l'unité de charge ne charge pas la seconde unité d'alimentation, jusqu'à ce qu'une quantité de temps, qui est mesurée et durant laquelle le périphérique multifonction fonctionne en continu dans le premier mode, devienne supérieure à une première quantité de temps prédéterminée,
commander (S202, S206 (OUI)) la première unité d'alimentation pour qu'elle permette au périphérique multifonction de commuter vers le second mode, où l'unité de charge ne charge pas la seconde unité d'alimentation, une fois qu'une quantité de temps, qui est mesurée et durant laquelle le périphérique multifonction fonctionne en continu dans le premier mode, devient supérieure à la première quantité de temps prédéterminée, et
commander (S209, S207 (OUI)) la première unité d'alimentation pour qu'elle permette au périphérique multifonction de commuter vers le second mode, où l'unité de charge ne charge pas la seconde unité d'alimentation, une fois qu'une quantité de temps totale, qui est mesurée et durant laquelle le périphérique multifonction fonctionne dans le premier mode après la mise sous tension du périphérique multifonction, devient supérieure à une seconde quantité de temps prédéterminée qui est plus longue que la première quantité de temps prédéterminée.

6. Procédé selon la revendication 5, dans lequel le périphérique multifonction comprend en outre une unité d'impression (109) configurée pour imprimer une image sur la base des données d'image mémorisées dans le support d'informations volatile (103).

7. Procédé selon la revendication 5 ou 6, comprenant en outre l'étape consistant à commander (S208, S207 (OUI)) l'unité de charge pour qu'elle interrompe la charge de la seconde unité d'alimentation, une fois que la quantité de temps totale, qui est mesurée et durant laquelle le périphérique multifonction fonctionne dans le premier mode après la mise sous tension du périphérique multifonction, devient supérieure à la seconde quantité de temps prédéterminée.

8. Procédé selon la revendication 5 ou 6, comprenant en outre l'étape consistant à charger la seconde unité d'alimentation par une charge de maintien, une fois que la quantité de temps totale, qui est mesurée et durant laquelle le périphérique multifonction fonctionne dans le premier mode après la mise sous tension du périphérique multifonction, devient supérieure à la seconde quantité de temps prédéterminée.

9. Produit-programme informatique comprenant des instructions qui, lorsque le programme est exécuté par un ordinateur, amènent l'ordinateur à mettre en œuvre les étapes du procédé selon l'une quelconque des revendications 5 à 8.
